# EUROPÄISCHE PATENTANMELDUNG

(11) **EP 2 662 618 A1**
(43) Veröffentlichungstag der Anmeldung: **13.11.2013**
(21) Anmeldenummer: 13002181.9
(22) Anmeldetag: 25.04.2013
(51) Int. Cl.: F21V 21/088, F21S 4/00, F21V 15/01, F21V 21/02, F21Y 101/02

(54) **Leuchte**

(30) Priorität: 09.05.2012 DE 202012004524 U
(71) Anmelder: Tunze Aquarientechnik GmbH, 82377 Penzberg (DE)
(72) Erfinder: Tunze, Axel, D-82377 Penzberg (DE); Tunze, Felix, D-82377 Penzberg (DE)
(74) Vertreter: Ostertag, Reinhard

(57) **Zusammenfassung**

Eine Leuchte, die insbesondere zur Verwendung an Aquarien bestimmt ist, umfasst ein stabförmiges Leuchtteil (10), welches lösbar in unterschiedliche Aufnahmen (18, 20) eines Befestigungsteils (12) einsetzbar ist.

## Beschreibung

Die Erfindung betrifft eine Leuchte mit einem Befestigungsteil und einem mit diesem verbundenen Leuchtteil.

Derartige Leuchten sind in unterschiedlicher Form auf dem Markt, insbesondere auch zur Beleuchtung von Aquarien. Bei ihnen wird das Befestigungsteil mit einer Klammer oder einem Magnetfuß oder einem Saugfuß an einer Glaswand des Aquariums befestigt. Das Leuchtteil umfasst eine Lampe, typischerweise eine Entladungsröhre, eine Halogenlampe oder einen Satz von Weißlichtdioden.

Bei den bekannten Leuchten werden das Befestigungsteil und das Leuchtteil einmal in der Fabrik zusammengebaut. Der Benutzer kann in der Regel zwar noch die Neigung der Leuchteinheit einstellen, er kann diese aber nicht grundsätzlich so umbauen, dass sie ein Lichtfeld anderer Geometrie erzeugt.

Insbesondere für die Beleuchtung von Aquarien sind nun auch Leuchteinheiten bekannt, welche ein gestrecktes Gehäuse aufweisen und ein gestrecktes Lichtfeld erzeugen, welches das Aquarium ausleuchtet.

Für manche Anwendungsfälle wäre es nun vorteilhaft, wenn auch noch der Benutzer die Orientierung des von der Leuchte erzeugten Lichtfelds bezüglich des Befestigungsteils abändern könnte. Auch für den Versand wäre es vorteilhaft, Befestigungseinheit und Leuchteinheit voneinander gelöst verpacken zu können. Es müsste dann aber dem Endverbraucher möglich sein, diese beiden Teile ohne Benutzung von Werkzeugen zusammenzufügen.

Zur Lösung dieser Aufgabe schafft die Erfindung eine Leuchte mit den im Anspruch 1 angegebenen Merkmalen.

Bei der erfindungsgemäßen Leuchte hat die Außenseite des Leuchtteils keine Strukturen, die vom Beobachter sofort als Befestigungsmittel wie Bohrungen, Bajonettverschlüsse, Steckverbindungen und dergleichen erkannt werden. Bei der erfindungsgemäßen Leuchte können somit nicht benutzte Befestigungsstellen der Leuchte ästhetischen Ansprüchen genügen. Soweit sie nicht zur Befestigung der Leuchte benötigt werden, fügen sie sich in ein ansprechendes äußeres Erscheinungsbild der Leuchte ein.

Vorteilhafte Weiterbildungen der Erfindung sind in Unteransprüchen angegeben.

Eine Leuchte, wie sie im Anspruch 2 angegeben ist, lässt sich besonders einfach aus ihren Teilen zusammensetzen. Man braucht nur eine elastische Kraft der Klammermittel zu überwinden, wobei die Klammermittel nach dem Zusammenfügen einen Abschnitt des Leuchtteils kraftschlüssig umgeben.

Dabei ist bei der Leuchte nach Anspruch 3 die Kraft, die notwendig ist, um das Leuchtteil mit dem Befestigungsteil zu verbinden, besonders klein. Da das Klammermittel Klammerarme aufweist, welche nach dem Anbringen des Leuchtteils dessen Gehäuse umgreifen, sind die auf Biegung belasteten Abschnitte des Befestigungsteils mit großen Krümmungsradien versehen, so dass Spannungs- und Ermüdungsbrüche im Material des Befestigungsteils vermieden sind.

Auch die Weiterbildung der Erfindung gemäß Anspruch 4 gestattet es, das Leuchtteil sicher und einfach mit dem Befestigungsteil zu verbinden, wobei nun das Leuchtteil an einem Endabschnitt gefasst wird. Dabei ist zugleich eine verkippungsfreie Anbringung des Leuchtteils am Befestigungsteil und eine vorgegebene Orientierung desselben am Befestigungsteil gewährleistet.

Die Weiterbildung der Erfindung gemäß Anspruch 5 ist dabei wieder im Hinblick auf ein einfaches Anbringen des Leuchtteils am Befestigungsteil von Vorteil.

Auch die Weiterbildung der Erfindung gemäß Anspruch 7 dient dazu, die Kraft, die man benötigt, um das Leuchtteil mit dem Befestigungsteil zu verbinden, klein zu halten.

Bei einer Leuchte gemäß Anspruch 8 kann man das Leuchtteil in zwei unterschiedlichen Positionen, insbesondere zwei unterschiedlichen Orientierungen am Befestigungsteil anbringen.

Die Weiterbildung der Erfindung gemäß Anspruch 9 gestattet es, mehr als ein Leuchtteil an einem Befestigungsteil anzubringen. Hierbei besteht insbesondere die Möglichkeit, mehrere Leuchtteile in paralleler Ausrichtung an einem Befestigungsteil anzubringen, so dass man eine rechen-oder kammähnliche Struktur erhält.

Die Weiterbildung der Erfindung gemäß Anspruch 10 ist im Hinblick auf die Herstellung von Leuchten, die mit unterschiedlichen Befestigungsteilen versehen sind, vorteilhaft. Das Befestigungsteil ist in zwei Segmenten unterteilt, die leicht (z. B. rastbar) miteinander verbunden sind, wobei das mit dem Leuchtteil zu verbindende Segment für alle Typen von Befestigungseinheiten das gleiche ist, während das zweite Segment für unterschiedliche Befestigungsmöglichkeiten jeweils spezifisch ausgebildet ist, z. B. einen Magnetfuß, einen Saugfuß oder eine Zwinge umfasst. Das geometrisch kompliziertere erste Segment kann somit in großer Stückzahl mit einer einzigen Spritzform preisgünstig hergestellt werden.

Die Weiterbildung der Erfindung gemäß Anspruch 11 hat den Vorteil, dass das von der Leuchte erzeugte Lichtfeld symmetrisch zur Mitte der Leuchteinheit liegt.

Die Variante der Erfindung gemäß Anspruch 12 hat den Vorteil, dass man das Leuchtteil an einer Wand eines Aquariums anbringen kann, das Aquarium aber bis in weiter von der Wand entfernte Abschnitte hinein ausleuchten kann.

Die Weiterbildung der Erfindung gemäß Anspruch 13 ist im Hinblick auf ein sicheres Fassen der Leuchteinheit durch die Befestigungseinheit von Vorteil, wobei die entsprechenden strukturellen Merkmale kleine Abmessungen aufweisen und nicht auffallen. Eine leichte Verjüngung lässt sich in die Außengeometrie eines Gehäuses leicht einarbeiten, ohne dass sie auffällt. Es handelt sich um eine Maßnahme, die auch als gestalterische Maßnahme bekannt ist und als solche aufgefasst wird.

Die Weiterbildung der Erfindung gemäß Anspruch 14 gestattet es, eine Vielzahl von Lichtquellen in äquivalenter Ausrichtung an der Leuchteinheit vorzusehen. Außerdem erhält die Leuchteinheit insgesamt unrunden Querschnitt, was im Hinblick auf ein Anbauen der Leuchteinheit in vorgegebener Orientierung nützlich ist.

Bei einer Leuchte gemäß Anspruch 15 trägt auch das Material des Gehäuses der Leuchteinheit dazu bei, eine lösbare kraftschlüssige Verbindung zwischen Leuchtteil und Befestigungsteil herzustellen.

Nachstehend wird die Erfindung anhand von Ausführungsbeispielen unter Bezugnahme auf die Zeichnung näher erläutert. Dabei werden verschiedene Richtungsangaben wie folgt verwendet: Die axiale Richtung verläuft senkrecht zur Befestigungsfläche, die transversale Richtung parallel zur Befestigungsfläche. "Unten" bezeichnet diejenige Seite des Leuchtteils, an welcher die Lichtquellen angebracht sind. "Oberseite" bedeutet die gegenüberliegende Seite der Leuchteinheit.

In den Figuren zeigen:
- Figur 1:: Eine seitliche Ansicht einer ersten Leuchte für Aquarien;
- Figur 2:: Eine Aufsicht auf die Leuchte nach Figur 1;
- Figur 3:: Eine Aufsicht auf die Unterseite der Leuchte nach Figur 1 schräg von vorn und unten;
- Figur 4:: Eine Aufsicht auf die Unterseite der Leuchteinheit der Leuchte nach Figur 1;
- Figur 5:: Eine seitliche Ansicht der Leuchteinheit nach Figur 4;
- Figur 6:: Eine perspektivische Aufsicht auf eine Leuchteinheit nach Figur 4 schräg von unten;
- Figur 7:: Eine axiale Aufsicht auf ein Befestigungsteil-Segment der Leuchte nach den Figuren 1 bis 3;
- Figur 8:: Eine transversale Ansicht des Befestigungsteil-Segmentes nach Figur 7;
- Figur 9:: Eine Aufsicht auf das Befestigungsteil-Segment nach Figur 7;
- Figur 10:: Eine Aufsicht auf die Außenseite des Befestigungsteil-Segments nach Figur 7 schräg von hinten gesehen;
- Figur 11:: Eine seitliche Ansicht einer weiteren Leuchte zur Verwendung in einem Aquarium;
- Figur 12:: Eine Aufsicht auf die Leuchte nach Figur 11;
- Figur 13:: Eine Ansicht der Leuchte nach Figur 11 schräg von unten;
- Figur 14:: Eine transversale Ansicht des Befestigungsteils der Leuchte nach den Figuren 11 bis 13.
- Figur 15:: Eine perspektivische Ansicht einer weiteren Leuchte mit zwei zueinander senkrechten Leuchtteilen; und
- Figur 16:: Eine perspektivische Ansicht einer aufhängbaren Leuchte mit vier parallelen Leuchtteilen.

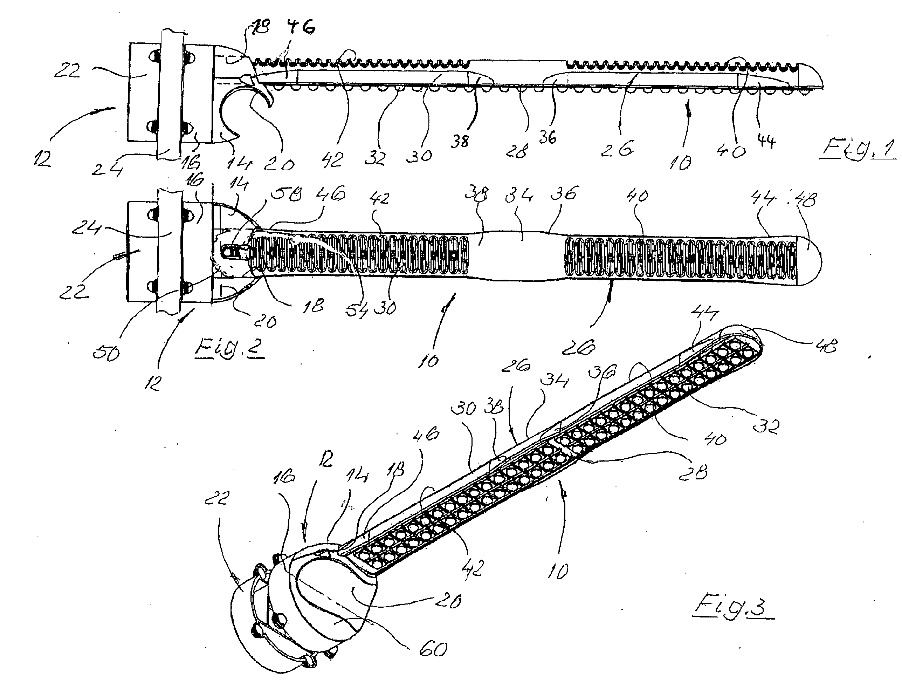

Die Figuren 1 bis 3 zeigen eine stabförmige Leuchte zur Verwendung an Aquarien, welche ein stabförmiges Leuchtteil 10 und ein Letzteres tragendes Befestigungsteil 12 aufweist.

Das Befestigungsteil 12 umfasst zwei Segmente 14, 16. Das Segment 14 ist als Magnetfuß ausgebildet, welcher einen Permanentmagneten oder eine Eisenplatte enthält. Das Segment 14 umfasst zwei Aufnahmen 18, 20, die jeweils einen von zwei unterschiedlichen Abschnitten eines Leuchtteils 10 aufnehmen und festhalten können.

Die Aufnahme 18 ist in axialer Richtung des Leuchtteils 10 ausgerichtet, wie gestrichelt angedeutet. Die Aufnahme 20 erstreckt sich in zur Längsrichtung des Leuchtteils 10 senkrechter Richtung.

Das Befestigungsteil 12 arbeitet mit einem Gegenstück 22 zusammen, welches bei dem betrachteten Ausführungsbeispiel entweder einen Permanentmagneten oder eine Eisenplatte umfasst. Auf diese Weise erhält man zwischen dem Befestigungsteil 12 und dem Gegenstück 22 eine anziehende Kraft derart, dass eine zwischen ihnen liegende Glasscheibe 24 sicher ergriffen wird. Die einander zugewandten Endflächen des Befestigungsteils 12 und des Gegenstücks 22 können mit einer hohe Reibung auf Glas aufweisenden Schicht belegt sein, die in der Zeichnung nicht dargestellt ist.

Das Leuchtteil 10 umfasst ein Gehäuse 26, welches eine ebene untere Gehäusewand 28 und eine etwa halbzylindrische obere Gehäusewand 30 aufweist. In der ebenen unteren Gehäusewand 28 ist eine Vielzahl von Weißlicht-Dioden 32 in einem Raster angeordnet. Die Weißlichtdioden 32 bedecken im Wesentlichen die gesamte Gehäusewand 28.

Die obere Gehäusewand 30 hat einen mittleren transversal erhöhten Wandbereich 34, der über Rampenflächen 36, 38 mit außen verippten Wandabschnitten 40, 42 verbunden ist.

Wie insbesondere aus Figur 2 ersichtlich, gehen die Wandabschnitte 40, 42 über seitliche schwach kegel- oder keilförmige in Auswärtsrichtung divergierende Wandabschnitte 44, 46 in Wandendabschnitte 48, 50 über, die die Form einer Viertelkugel haben.

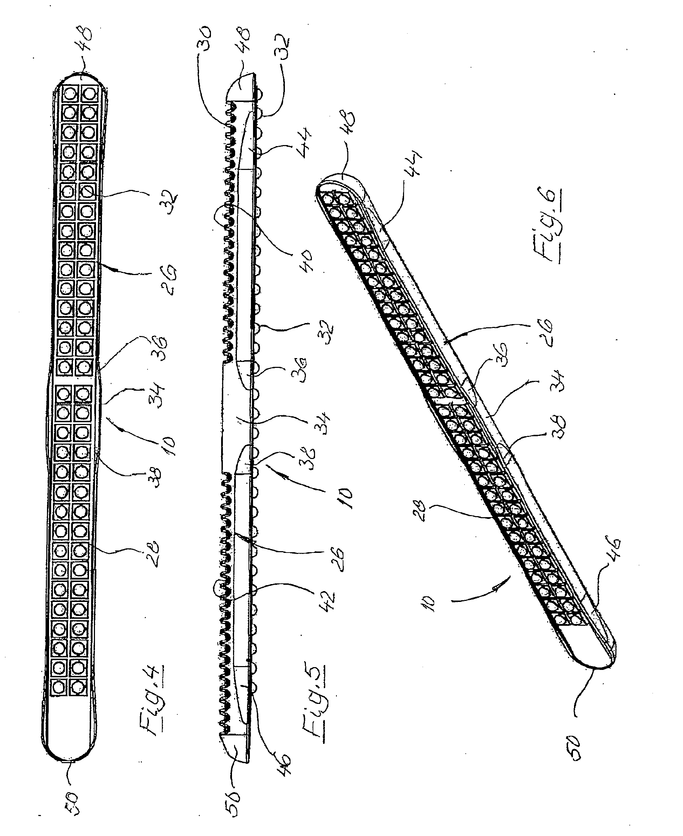

Siehe hierzu auch die Figuren 4 bis 5, welche den Leuchtteil 10 separat darstellen.

Nunmehr wird unter Bezugnahme auf die Figuren 1 bis 3 und 7 bis 10 die Geometrie des Segmentes 14 des Befestigungsteils 12 näher beschrieben. Dieses ist im Wesentlichen symmetrisch zu einer Mittelebene.

Das Segment 14 hat grob die Form einer Halbkugel, deren Oberfläche aber deutlich modifiziert ist.

In einem oberen Teil der Halbkugel erkennt man die Aufnahme 18. Letztere umfasst eine Kammerwand 52, deren Innenfläche komplementär zur Außenfläche des Gehäuses 26 des Leuchtteils 10 ist. Von der obersten Stelle der Kammerwand 52 geht ein Schlitz 54 aus, der durch eine angeformte Wand vorgegeben ist und eine Schräge 56 aufweist. Dieser Schlitz 54 erlaubt zum einen durch Unterbrechung einer Ringspannung ein Auffedern der Kammerwand 52 beim Einführen eines Endes des Gehäuses 26. Zum anderen schafft der Schlitz 54 eine Sichtverbindung zum im Befestigungsteil 12 steckenden Ende des Leuchtteils 10. Es ist daher möglich, in diesem Teil des Leuchtteils 10 eine LED 58 anzuordnen, die eine Anzeige über den Betriebszustand des Leuchtteils 10 liefert, wie sie in Figur 2 angedeutet ist. Auch kann der Schlitz 54 einen an der mit 58 bezeichneten Stelle statt der LED vorgesehene Führungszapfen aufnehmen.

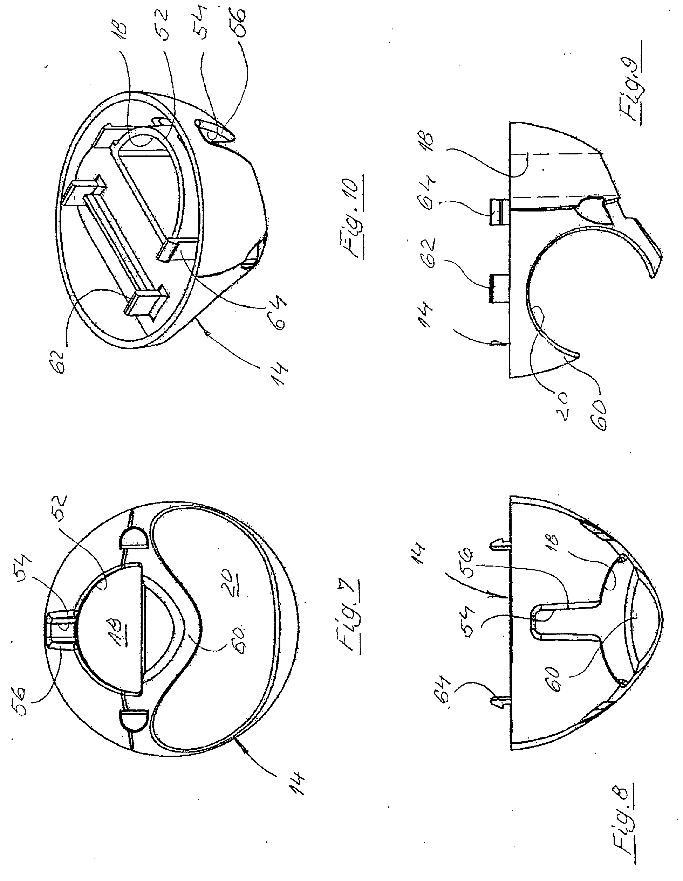

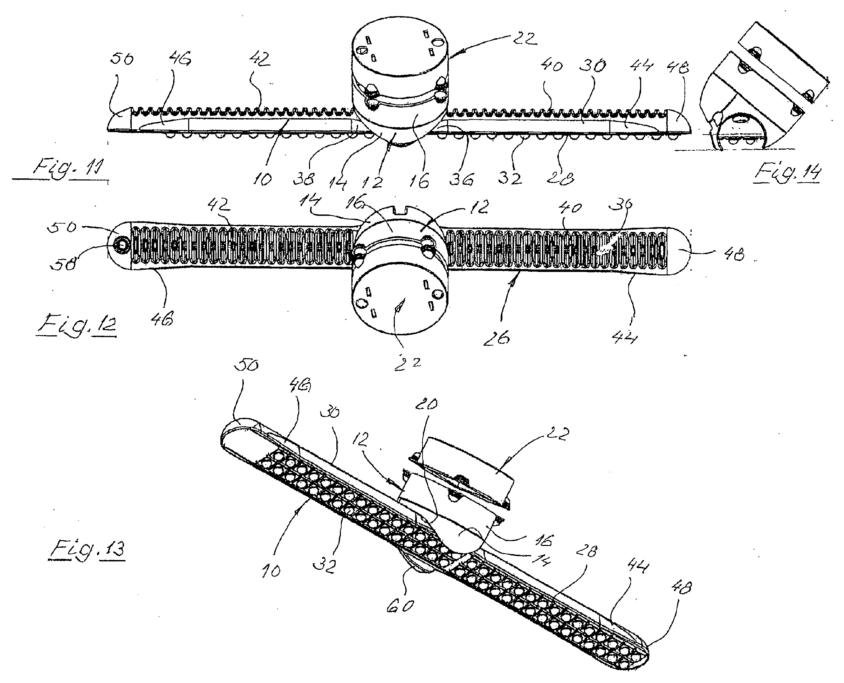

Man erkennt in Figur 7 ferner die Aufnahme 20. Diese ist im Wesentlichen komplementär zur mittleren Gehäusewand 34 des Leuchtteils 10. Die Aufnahme 20 ist in Richtung zum Leuchtteil 10 offen, wobei sich ein oberer abgerundeter zungenförmiger Wandabschnitt 60 über die Oberseite eines in die Aufnahme 20 gesteckten mittleren Gehäuseabschnitts eines Leuchtteils 10 ersteckt und dieses elastisch festspannt, wenn es in die Aufnahme 20 eingesetzt ist, wie in den Figuren 11 bis 13 gezeigt.

Die Gesamtumfangserstreckung der Aufnahme 20 ist größer als 180°, wie insbesondere aus Figur 8 ersichtlich. Beim dargestellten Ausführungsbeispiel hat man einen Umfangswinkel der Aufnahme 20, der etwa 240° beträgt.

Das gesamte Segment 14 ist ein hohles Spritzteil, welches aus elastischem Kunststoffmaterial gespritzt ist.

Auf der Außen- oder Rückseite des Segments 14 hat man, wie aus Figur 10 ersichtlich, zum einen zwei Positionierlaschen 62, die rechteckigen transversalen Querschnitt haben, zum anderen zwei seitliche Verriegelungslaschen 64, welche mit Widerhaken 66 versehen sind.

Die Positionierlaschen 62 und die Verriegelungslaschen 64 arbeiten mit komplementären Mitteln zusammen, die im Segment 16 des Befestigungsteils 12 vorgesehen sind und hier nicht näher gezeigt zu werden brauchen.

Die Figuren 11 bis 13 zeigen eine Leuchte, bei welcher eine Leuchteinheit 10 in die Aufnahme 20 eingesetzt ist.

Man kann von der Leuchte gemäß den Figuren 1 bis 3 dadurch zu einer Leuchte gemäß den Figuren 11 bis 13 kommen, dass man das Leuchtteil 10 unter elastischer Verformung der Aufnahme 18 aus dem Befestigungsteil 12 herauszieht und in die Aufnahme 20 in axialer Richtung hineinschiebt.

Da der Durchmesser des Gehäuses 26 im Bereich der mittleren Gehäusewand 34 am größten ist, können die anderen Gehäuseteile durch die Aufnahme 20 hindurchbewegt werden, bis eine der Rampenflächen 36, 38 in die Aufnahme 20 eintritt. Ab diesem Zeitpunkt werden dann die Wände der Aufnahme 20 etwas aufgeweitet, und ist der mittlere Gehäuseabschnitt mit der Gehäusewand 34 in die Aufnahme 20 eingeführt, wird das Leuchtteil 10 sicher kraftschlüssig am Befestigungsteil 12 gehalten.

In den Figuren 11 bis 13 ist das Leuchtteil 10 so in das Befestigungsteil eingesetzt, dass die Gehäusewand 28 unter etwa 45° zu einer Glasscheibe 24 geneigt ist, die zwischen dem Befestigungsteil 12 und dem Gegenstück 22 gehalten ist (vgl. Figur 14).

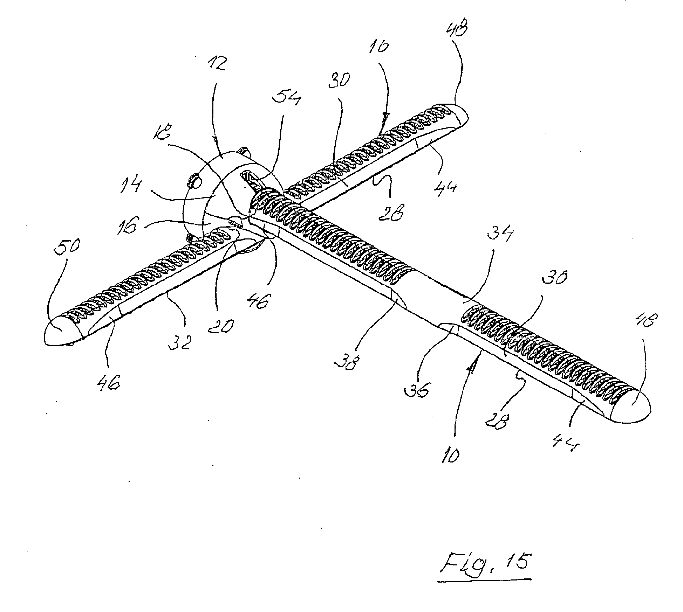

Figur 15 zeigt eine weitere Leuchte, bei welcher sowohl die Aufnahme 18 als auch die Aufnahme 20 eine Leuchteinheit 10 tragen.

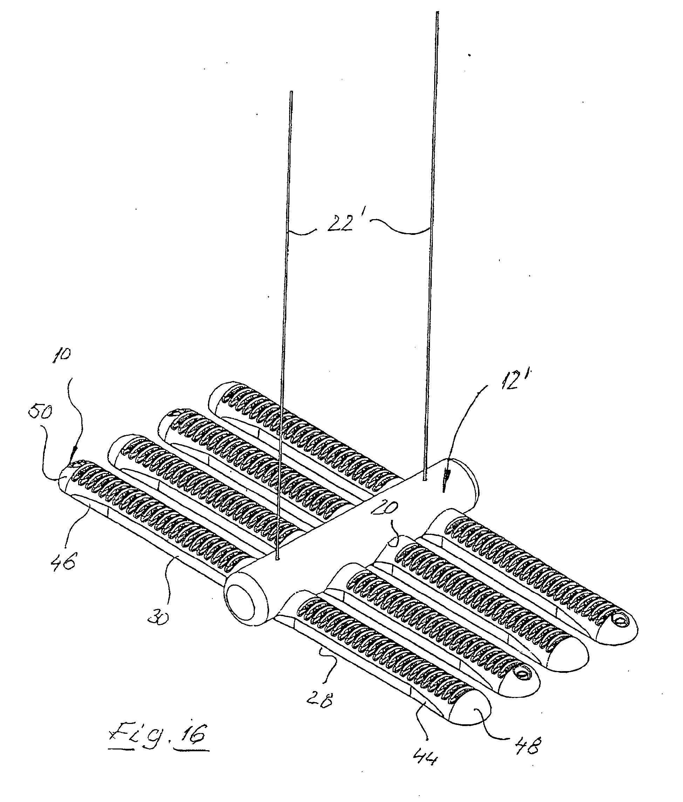

Figur 16 zeigt eine hängende Leuchte, bei welcher ein Befestigungsteil 12' vier parallele Aufnahmen 20 aufweist, die jeweils ein Leuchtteil 10 tragen. Das Gegenstück 22 der weiter oben beschriebenen Ausführungsteile ist durch zwei Drahtseile 22' ersetzt.

In Abwandlung von dem gezeigten Ausführungsbeispiel kann man das Gehäuse 26 auch so ausbilden, dass seine Oberseite mit Weißlichtdioden 32 bestückt ist. Dabei kann deren Dichte unterschiedlich gewählt sein wie bei der Unterseite des Gehäuses. Auch kann man für die Oberseite des Gehäuses 26 Dioden unterschiedlicher Farbe vorsehen.

In weiterer Abwandlung kann die Oberseite des Gehäuses 26 mit Ausnahme des mittleren Gehäuseabschnitts, der dem Wandbereich 34 entspricht, eben, elliptisch oder satteldachähnlich ausgebildet sein.

In nochmaliger Abwandlung des Ausführungsbeispiels kann das Gehäuse 26 zumindest in denjenigen Teilen, in denen es mit dem Befestigungsteil 12 zusammenarbeitet, aus verhältnismäßig dünnwandigem Material hergestellt sein, so dass es auch auf diese Weise mit dem Befestigungsteil 12 elastisch nachgiebig zusammenarbeiten kann.

## Patentansprüche

1. Leuchte mit einem Befestigungsteil (12) und einem
mit diesem verbundenen Leuchtteil (10), **dadurch gekennzeichnet, dass** das Befestigungsteil (12) mindestens ein Befestigungsmittel (18; 20) aufweist, welches mit einem glatten Abschnitt eines Gehäuses (26) des Leuchtteils (10) zusammenarbeitet.

2. Leuchte nach Anspruch 1, **dadurch gekennzeichnet,**
**dass** das mindestens eine Befestigungsmittel (18; 20) mindestens ein elastisches Klammermittel umfasst.

3. Leuchte nach Anspruch 2, **dadurch gekennzeichnet,**
**dass** das Klammermittel zwei getrennte Klammerarme aufweist, welche einen Abschnitt des Gehäuses (26) des Leuchtteils (10) umgreifen.

4. Leuchte nach Anspruch 2 oder 3, **dadurch gekennzeichnet,**
**dass** das Befestigungsteil (12) mindestens ein elastisches Klammermittel (18; 20) umfasst, dessen Geometrie im Wesentlichen komplementär zur Geometrie eines Abschnitts (44, 46) des Gehäuses (26) der Leuchteinheit (10) ist.

5. Leuchte nach einem der Ansprüche 1 bis 4, **dadurch**
**gekennzeichnet, dass** zumindest ein Abschnitt des Gehäuses (26) des Leuchtteils (10) elastisch verformbar ist.

6. Leuchte nach einem der Ansprüche 1 bis 5, **dadurch**
**gekennzeichnet, dass** ein Befestigungsabschnitt (34) des Gehäuses (26) des Leuchtteils (10) über mindestens eine Rampenfläche (36; 38) in die Grund-Außenkontur (42, 44) des Gehäuses (26) des Leuchtteils (10) übergeht.

7. Leuchte nach einem der Ansprüche 1 bis 6, **dadurch**
**gekennzeichnet, dass** das Befestigungsteil (12) mindestens zwei Befestigungsmittel (18; 20) umfasst, die gleichermaßen mit einem Abschnitt (34, 44, 46) des Gehäuses (26) des Leuchtteils (10) zusammenarbeiten können.

8. Leuchte nach Anspruch 7, **dadurch gekennzeichnet,**
**dass** das Befestigungsteil (12) mindestens zwei unterschiedliche Befestigungsmittel (18; 20) und das Leuchtteil (10) mindestens zwei unterschiedliche Abschnitte (34, 44, 46) seines Gehäuses (26) aufweist, die mit den unterschiedlichen Befestigungsmitteln (18; 20) des Befestigungsteils (10) zusammenarbeiten können.

9. Leuchte nach Anspruch 7 oder 8, **dadurch gekennzeichnet,**
**dass** das Befestigungsteil (12) mindestens zwei gleiche Befestigungsmittel (20) aufweist.

10. Leuchte nach einem der Ansprüche 1 bis 9, **dadurch**
**gekennzeichnet, dass** das Befestigungsteil (12) zwei Segmente (14, 16) umfasst, von denen das eine mit den Befestigungsmitteln (18, 20) versehen ist, über welche das Befestigungsteil (12) mit dem Leuchtteil (10) zusammenarbeitet, und das andere mit Verbindungsmitteln versehen ist, welche mit Gegen-Verbindungsmitteln eines Gegenstücks (22, 22') zusammenarbeiten.

11. Leuchte nach einem der Ansprüche 1 bis 10, **dadurch**
**gekennzeichnet, dass** mindestens einer (34) der Gehäuseabschnitte (34, 44, 46), welche mit dem Befestigungsteil (12) zusammenarbeiten, bei der axialen Mitte des Leuchtteils (10) liegt.

12. Leuchte nach einem der Ansprüche 1 bis 11, **dadurch**
**gekennzeichnet, dass** mindestens einer (44, 46) der Gehäuseabschnitte (34, 44, 46), welche mit dem Befestigungsteil (12) zusammenarbeiten, bei einem Ende des Leuchtteils (10) liegt.

13. Leuchte nach Anspruch 12, **dadurch gekennzeichnet,**
**dass** der mindestens eine der einem Ende des Gehäuses (26) benachbarten Gehäuseabschnitte (44, 46), der mit dem Befestigungsteil (12) zusammenarbeitet, einen sich in axialer Einwärtsrichtung verjüngenden Wandabschnitt umfasst.

14. Leuchte nach einem der Ansprüche 1 bis 13, **dadurch**
**gekennzeichnet, dass** das Leuchtteil (10) eine im Wesentlichen ebene erste Begrenzungswand (28) und eine im Wesentlichen halbzylindrische Begrenzungswand (30) aufweist und in der im Wesentlichen ebenen Begrenzungswand (28) eine Vielzahl von Lichtquellen vorgesehen (32) ist, welche vorzugsweise in Matrixform angeordnet sind.

15. Leuchte nach einem der Ansprüche 1 bis 14, **dadurch**
**gekennzeichnet, dass** das Befestigungsteil (12) und/oder das Gehäuse (26) des Leuchtteils (10) zumindest teilweise aus elastischem Kunststoffmaterial hergestellt sind.
